Europäisches Patentamt

European Patent Office

Office européen des brevets

(11) Veröffentlichungsnummer: **0 157 114**
**B1**

(12) **EUROPÄISCHE PATENTSCHRIFT**

(45) Veröffentlichungstag der Patentschrift:
28.06.89

(21) Anmeldenummer: 85101140.3

(22) Anmeldetag: 04.02.85

(51) Int. Cl.⁴: **B 23 B 27/14**, B 23 D 77/02

(54) **Messerplatte.**

(30) Priorität: 06.02.84 DE 3404005

(43) Veröffentlichungstag der Anmeldung:
09.10.85 Patentblatt 85/41

(45) Bekanntmachung des Hinweises auf die Patenterteilung: 28.06.89 Patentblatt 89/26

(84) Benannte Vertragsstaaten:
CH FR GB LI SE

(56) Entgegenhaltungen:
CH–A– 379 882
CH–A– 510 481
DE–B– 1 280 636
SE–B– 422 287

(73) Patentinhaber: MAPAL Fabrik für Präzisionswerkzeuge Dr. Kress KG
Obere Bahnstrasse 13 Postfach 1520
D-7080 Aalen (DE)

(72) Erfinder: Die Erfinder haben auf ihre Nennung
verzichtet

(74) Vertreter: Gleiss, Alf-Olav, Dipl.-Ing.
Patentanwalt Silberburg Strasse 187
D-7000 Stuttgart 1 (DE)

## Beschreibung

Die Erfindung betrifft eine Messerplatte der im Oberbegriff des Anspruchs 1 angegebenen Gattung.

Bei solchen, aus der SE-B-422 287 bekannten Messerplatten besteht insbesondere bei der Zerspanung langspanender Werkstoffe die Gefahr, daß die verhältnismäßig breiten Späne sich im Spanabflußraum stauen oder auch gegen die Bohrungswand gepresst werden, so daß ein gleichmäßiger Spanablauf nicht gewährleistet ist. Diese Gefahr besteht insbesondere auch beim Einsatz solcher Messerplatten in Reibahlen mit kleinem Messerkopfdurchmesser.

Der Erfindung liegt daher die Aufgabe zugrunde, die Spanfläche und die Spanleitstufe einer Messerplatte der vorgenannten Gattung so auszubilden, daß die bei der Bearbeitung langspanender Werkstoffe anfallenden langen Späne insbesondere auch bei Reibahlen mit kleinem Messerkopfdurchmesser ohne Stau aus der Bohrung herausgeführt und dabei nicht an die geriebene Bohrungswandung gedrückt werden, die dadurch der Gefahr einer Aufrauhung ausgesetzt ist.

Diese Aufgabe wird gemäß der Erfindung durch die Ausbildung einer Messerplatte gelöst, die die im Kennzeichen des Anspruchs 1 angegebenen Merkmale aufweist. Vorteilhafte Weiterbildungen einer solchen Messerplatte ergeben sich aus den Unteransprüchen.

Durch die nach der Stirnfläche der Messerplatte zu sich absenkende und sich verbreiternde Spanleitfläche wird eine sich erweiternde Mulde gebildet, an deren Wandung die Späne ohne Stauchung spiralig oder auch schraubenförmig mit kleinem Radius gekrümmt und in dem sich erweiternden Kühlmittelkanal, ohne an die Bohrungswandung gepreßt zu werden, zuverlässig abgeführt werden.

In der Zeichnung ist ein Ausführungsbeispiel der erfindungsgemäßen Messerplatte in schematischer Weise dargestellt. Es zeigen

Fig. 1 eine Seitenansicht einer als Wendemesserplatte ausgebildeten Messerplatte,

Fig. 2 eine Draufsicht auf die Messerplatte,

Fig. 3 einen senkrechten Teilschnitt durch die Messerplatte nach der Schnittlinie III-III der Fig. 1,

Fig. 4 einen senkrechten Teilschnitt nach der Schnittlinie IV-IV der Fig. 1,

Fig. 5 einen senkrechten Teilschnitt nach der Schnittlinie V-V der Fig. 1,

Fig. 6 ein aus der Messerplatte ausgebrochenes Teilstück in perspektivischer Darstellung.

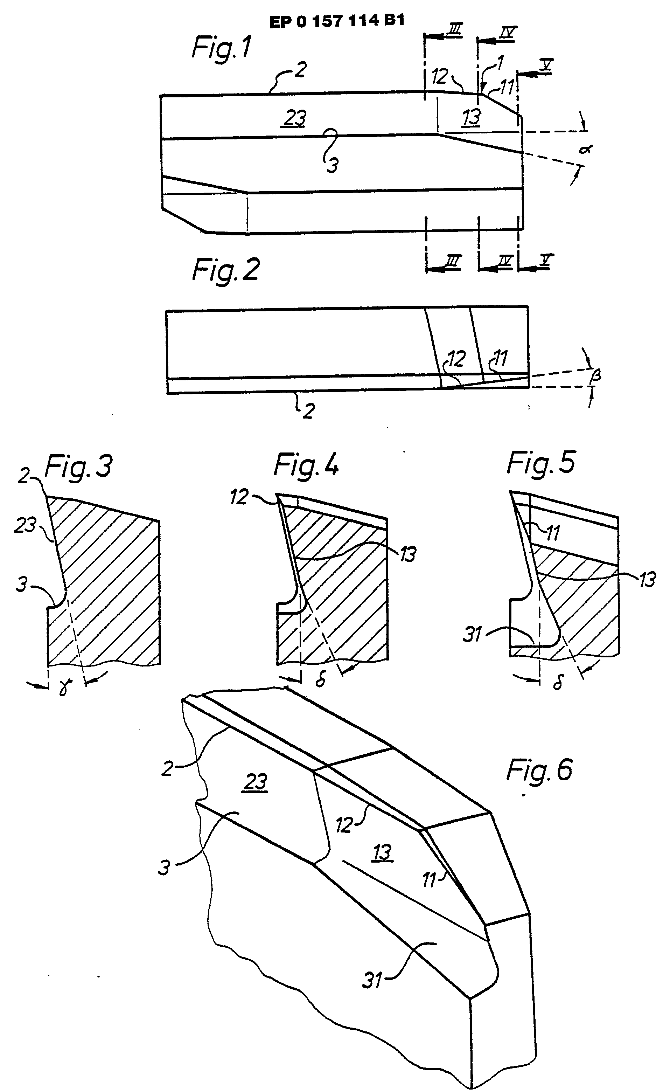

Die Messerplatte weist eine Hauptschneide 1, eine Nebenschneide 2 und eine Spanleitstufe 3 auf. Die Hauptschneide 1 weist eine steiler geneigte Schruppschneide 11 und eine nur schwach geneigte Schlichtschneide 12 auf. Die Spanfläche 13 der Hauptschneide 1 ist gegenüber der Spanfläche 23 der Nebenschneide 2 um einen Winkel β geneigt, der beispielsweise 4° beträgt, so daß sich hieraus eine zunehmende Verbreiterung der Spanleitstufe 3 ergibt. Zusätzlich senkt sich die Vorderkante der Spanleitstufe im Bereich der Hauptschneide 1 um den Winkel α, der einen Wert von etwa 10° annehmen kann. Auf diese Weise wird die im Bereich der Hauptschneide 1 sich erweiternde Spanableitmulde 31 gebildet, wie aus Fig. 6 ersichtlich ist.

Der Spenwinkel γ beträgt im Bereich der Hauptschneide 1 und der Nebenschneide 2 etwa 12°. Im unteren, durch die Spanmulde 31 gebildeten Bereich der Hauptschneide 1 beträgt der Spanwinkel δ, wie aus den Fig. 4 und 5 ersichtlich, etwa 16°.

## Patentansprüche

1. Messerplatte zum Einsatz in Schneidwerkzeuge der spanabhebenden Bearbeitung, insbesondere in Einschneiden-Reibahlen mit einer eine gegenüber der Spanfläche (23) einer Nebenschneide (2) abgewinkelte Spanfläche (13) aufweisenden Hauptschneide (1), mit einer eine im wesentlichen senkrecht zur Messerplatte verlaufende Verlängerung der Spanfläche bildenden Spanleitstufe (3) und mit einem konkaven Übergang zwischen Spanfläche und Spanleitstufe (3), die sich in Richtung auf die Stirnfläche der Messerplatte unter einem Winkel (α) senkt und verbreitert, dadurch gekennzeichnet, daß die Spanleitstufe (3) im unmittelbar an die Spanleitstufe angrenzenden Bereich der Hauptschneide (1) eine Mulde (31) bildet, wobei der Spanwinkel (δ) im unteren an die Spanleitstufe angrenzenden Bereich der Hauptschneide (1) größer ist als der Spanwinkel (γ) in deren oberen Bereich.

2. Messerplatte nach Anspruch 1, dadurch gekennzeichnet, daß der Spanwinkel (δ) im unteren Bereich der Hauptschneide (1) größer ist als der Spanwinkel (γ) im Bereich der Nebenschneide.

## Claims

1. Cutter plate for insertion in cutting tools for chip-removal-type machining, in particular, in singleedge reamers with a main cutting edge (1) having a face (13) which extends at an angle to the face (23) of a secondary cutting edge (2), with a chip-guiding step (3) forming a face extension which is substantially perpendicular to the cutter plate, and with a concave transition between face and chip-guiding step (3) which declines at an angle (α) and increases in width in the direction towards the end face of the cutter plate, characterized in that the chip-guiding step (3) forms a trough (31) in the region of the main cutting edge (1) immediately adjoining the chip-guiding step, the rake angle (δ) in the lower region of the main cutting edge (1) adjoining the chip-guiding step being larger than the rake angle (γ) in the upper region thereof.

2. Cutter plate according to Claim 1, characterized in that the rake angle (δ) in the lower region of the main cutting edge (1) is larger than the rake angle (γ) in the region of the secondary cutting edge.

**Revendications**

1. Plaquette de coupe pour la mise en place dans des outils de coupe par enlèvement de copeaux, en particulier dans des alésoirs à un seul tranchant, avec un tranchant principal (1) présentant une face de coupe (13) coudée par rapport à la face de coupe (23) d'une arête de coupe secondaire (2), avec un guide-copeaux (3) formant un prolongement de la face de coupe qui s'étend sensiblement perpendiculairement à la plaquette de coupe, et avec une transition concave entre la face de coupe et le guide-copeaux (3) qui descend d'un angle (α) et s'élargit en direction de la face frontale de la plaquette de coupe, caractérisée en ce que le guide-copeaux (3) forme une cavité (31) dans la zone du tranchant principal (1) directement contiguë au guide-copeaux, l'angle de coupe (δ) dans la zone inférieure du tranchant principal (1) contiguë au guide-copeaux étant plus grand que l'angle de coupe (γ) dans la zone supérieure de celui-ci.

2. Plaquette de coupe selon la revendication 1, caractérisée en ce que l'angle de coupe (δ) dans la zone inférieure du tranchant principal (1) est plus grand que l'angle de coupe (γ) dans la zone de l'arête de coupe secondaire.

EP 0 157 114 B1

Fig.1

Fig.2

Fig.3

Fig.4

Fig.5

Fig.6